(19) **Europäisches Patentamt**
**European Patent Office**
**Office européen des brevets**

(11) Veröffentlichungsnummer: **0 419 728 A1**

(12) **EUROPÄISCHE PATENTANMELDUNG**

(21) Anmeldenummer: **89118088.7**

(22) Anmeldetag: **29.09.89**

(51) Int. Cl.5: **H02M 3/335**

(43) Veröffentlichungstag der Anmeldung:
**03.04.91 Patentblatt 91/14**

(84) Benannte Vertragsstaaten:
**BE DE ES FR GB IT NL**

(71) Anmelder: **Siemens Aktiengesellschaft**

Wittelsbacherplatz 2
**W-8000 München 2(DE)**

(72) Erfinder: **Feldtkeller, Martin, Dipl.-Ing.**
**Josephsburgstrasse 59**
**W-8000 München 80(DE)**

(54) **Schaltungsanordnung für ein festfrequentes Sperrwandler-Schaltnetzteil.**

(57) Bei einem festfrequenten, synchronisierbaren Sperrwandler erzeugt üblicherweise eine integrierte Steuerschaltung (IS) ein synchronisierbares Oszillatorsignal ($U_{OS}$) und schaltet synchron mit dem Oszillator (OS) einen primärseitigen Schalttransistor (6). Es wird vorgeschlagen, den Oszillator (OS) folgendermaßen auszubilden: Das Oszillatorsignal ($U_{OS}$) hat einen festen oberen Spitzenwert ($U_{OS1}$) und einen variablen unteren Spitzenwert ($U_{OS2}$). Der Abstand zwischen beiden Spitzenwerten ist proportional zur gleichgerichteten Netzspannung ($U_E$). Die Dauer der fallenden Oszillatorsignalflanke ist dabei konstant. Bei einer solchen Signalform ist die Anstiegsgeschwindigkeit des Oszillatorsignals ($U_{OS}$) proportional zur Netzspannung. Auch der Anstieg des Kollektorstroms ($I_C$) im Schalttransistor (6) ist netzspannungsproportional, so daß das Oszillatorsignal ($U_{OS}$) eine Information über den Kollektorstrom ($I_C$) enthält. Der Lösungsvorschlag ermöglicht somit eine Kollektorstromnachbildung ohne zusätzliche Außenbeschaltung.

## FIG 3

## SCHALTUNGSANORDNUNG FÜR EIN FESTFREQUENTES SPERRWANDLER-SCHALTNETZTEIL

Die Erfindung bezieht sich auf eine Schaltungsanordnung gemäß dem Oberbegriff des Anspruchs 1. Festfrequente Sperrwandler mit solchen Schaltungen sind in einer Reihe von Ausführungen bekannt; vgl. hierzu beispielsweise die von J. Wüstehube herausgegebene Monographie "Schaltnetzteile", 1979, Expert-Verlag, insbesondere das dortige Kapitel 3.

Festfrequent arbeitende Sperrwandler verlangen im allgemeinen eine etwas aufwendigere Beschaltung als freischwingende Sperrwandler. Sie werden aber dann vorgezogen, wenn der Zeitpunkt des Stromübergangs von der Primär- auf die Sekundärseite - in diesem Moment entstehen die energiereichsten HF-Störungen - mit einem anderen Vorgang synchronisiert werden soll. Eine solche Synchronisation empfiehlt sich beispielsweise für besonders leistungsstarke Fernseh-Schaltnetzteile, bei denen eine HF-Entstörung nicht mehr ohne weiteres gelingt. Verlegt man hier die hochfrequenten Störimpulse in den Zeilenrücklauf des Fernsehgeräts, so bleiben sie unsichtbar.

In einem typischen Sperrwandler mit fester Arbeitsfrequenz erzeugt eine integrierte Steuerschaltung (Ansteuerbaustein) ein synchronisierbares Oszillatorsignal, bildet aus der Abweichung der Lastspannung von einem Sollwert ein Regelsignal und schaltet synchron mit dem Oszillator einen Schalttransistor, und zwar so, daß dessen Kollektorspitzenstrom durch das Regelsignal bestimmt wird. Diese Funktionen werden im allgemeinen - vgl. hierzu etwa TLE, Dezember 1988, Nr. 539; S. 27 bis 31 - folgendermaßen realisiert: Der Oszillator erhält zwei feste Schaltschwellen, wobei ein anliegender Synchronimpuls die obere Schaltschwelle etwas nach unten verschiebt und dadurch die Oszillatorfrequenz auf die Frequenz des Synchronsignales erhöht. Der Entladeimpuls des Oszillators startet einen Ansteuerimpuls für den Schalttransistor, dem nun - zur Vemeidung einer Übersättigung - ein seinem Kollektorstrom proportionaler Basisstrom eingeprägt wird. Die Information über den Kollektorstrom gewinnt man aus einer Meßspannung, die entweder an einem Emitterwiderstand oder an einem parallel zum primärseitigen Leistungsteil liegenden RC-Glied abgenommen wird. Wenn diese Meßspannung einen vom Regelsignal vorgegebenen Schwellwert überschreitet, beendet der Ansteuerbaustein den Ansteuerimpuls.

Bei einer solchen Schaltung verlangt die Kollektorstromnachbildung eine Reihe von externen Bauelementen und einen separaten Bausteinanschluß. Hinzu kommt, daß sich das Schaltnetzteil nur mit erheblichem Aufwand, etwa einem umfangreichen PLL-Schaltkreis, synchronisieren läßt.

Der Erfindung liegt die Aufgabe zugrunde, eine Schaltungsanordnung der eingangs genannten Art zu schaffen, die eine minimale Außenbeschaltung benötigt, mit relativ wenigen IC-Anschlüssen auskommt sowie eine einfache Synchronisation erlaubt und somit insbesondere auch unter Kostengesichtspunkten, die bei Schaltnetzteilen für Geräte der Unterhaltungsindustrie im Vordergrund stehen, attraktiv ist. Diese Aufgabe wird erfindungsgemäß durch eine Schaltungsanordnung mit den Merkmalen des Patentanspruchs 1 gelöst. Die Eingangsspannung $U_E$ des Schaltnetzteils ist dabei in aller Regel eine gleichgerichtete, geglättete Netzspannung mit positiven Werten.

Wenn, wie erfindungsgemäß vorgesehen, bei positiver Eingangsspannung die Spannungsanstiegsgeschwindigkeit des Oszillatorsignals $U_{OS}$ proportional zur Eingangsspannung ist, so enthält das Signal automatisch die erforderliche Information über den Kollektorstrom des Schalttransistors. Der Kollektorstrom steigt nämlich ebenfalls - bei fest vorgegebener Transformatorinduktivität - proportional zur Eingangsspannung an. Insofern braucht man diesen Strom nicht mehr eigens zu erfassen.

Das Oszillatorsignal liefert allerdings nur dann die gewünschte Information, wenn der Transformator seine Induktivität nicht ändert. Dies ist sichergestellt, wenn man dafür sorgt, daß der Schalter nach jeder Sperrphase erst dann wieder eingeschaltet wird, wenn der Transformator seine magnetische Energie vollständig abgegeben hat.

Das gewünschte $U_{OS}$-Verhalten stellt sich beispielsweise dann ein, wenn man die Differenz zwischen dem oberen und dem unteren Spitzenwert, also die Signalamplitude, proportional zur Eingangsspannung macht und die Dauer der Abschnitte, in denen $U_{OS} \sim U_E$ gelten soll, konstant hält.

In einem bevorzugten Ausführungsbeispiel wird die Einschaltdauer des Schalters sowohl durch eine die Ausgangspannung repräsentierende Regelschwelle als auch durch die Eingangsspannung bestimmt, und zwar auf folgende Weise: Man gibt eine von der Eingangsspannung unabhängige Oszillatorfrequenz vor, hält den oberen Spitzenwert fest, senkt den unteren Spitzenwert mit zunehmender Eingangsspannung ab und erzeugt eine zwischen beiden Spitzenwerten liegende, mit wachsender Ausgangsspannung sinkende Regelschwelle. Der Schalter wird dann eingeschaltet, wenn das Oszillatorsignal die Regelschwelle überschreitet, und dann wieder abgeschaltet, wenn das Oszillatorsignal den oberen Spitzenwert erreicht. Damit nimmt die Einschaltzeit mit zunehmenden $U_E$-Werten und/oder zunehmendem $U_A$-Werten ab. Zugleich ist in der Flußphase zu jeder Zeit die Differenz aus dem Oszillatorsignal und der Regelschwelle proportional zum Kollektorstrom des Schalttransistors.

Regelmäßig enthält die Schaltung eines Sperrwandlers bereits eine Entmagnetisierungsüberwachung, die einen Ansteuerimpuls für den Schalter erst dann freigibt, wenn der Transformator vollständig entmagnetisiert ist. In diesem Fall empfiehlt es sich, im Rahmen des erwähnten Ausführungsbeispiels das Oszillatorsignal beim Durchlaufen der Steuerflanke auf der Regelschwelle anzuhalten, bis die Entmagnetisierungsüberwachung ein Freigabesignal abgibt.

Will man die energiereichen HF-Störungen des Schaltnetzteils in den Zeilenrücklauf eines Fernsehempfängers legen, so bietet es sich an, während des Zeilenrücklaufs ein Synchronsignal zu erzeugen und das Oszillatorsignal zu Beginn der Steuerflanke auf dem betreffenden Spitzenwert festzuhalten, solange das Synchronsignal anliegt.

Weitere vorteilhafte Ausgestaltungen und Weiterbildungen der Erfindung sind Gegenstand zusätzlicher Ansprüche.

Die Erfindung soll nun anhand eines bevorzugten Ausführungsbeispiels unter Bezugnahme auf die Figuren der beigefügten Zeichnung näher erläutert werden. In den Figuren sind einander entsprechende Teile mit gleichen Bezugszeichen versehen. Es zeigen:

FIG 1 das Schaltbild des Ausführungsbeispiels, wobei der Ansteuerbaustein lediglich als Block dargestellt ist;

FIG 2 vom Ausführungsbeispiel der FIG 1 den Ansteuerbaustein mit seinen einzelnen Schaltungsblöcken;

FIG 3 von den Schaltungsblöcken "Oszillator" und "Pulsbreitenmodulator" wesentliche Teile in größerem Detail; und

FIG 4 ein Impulsdiagramm, in dem das Oszillatorsignal $U_{OS}$, das Treibersignal $U_T$ für den Schalttransistor, dessen Kollektorstrom $I_C$, die Rückkopplungsspannung $U_{RK}$ sowie der Synchronimpuls $U_{Sync}$ als Funktionen der Zeit t aufgetragen sind.

Der Übersicht halber sind in den Figuren Schaltungsteile, die nicht unbedingt zu einem Verständnis der Erfindung beitragen, weggelassen oder nur schematisch eingezeichnet.

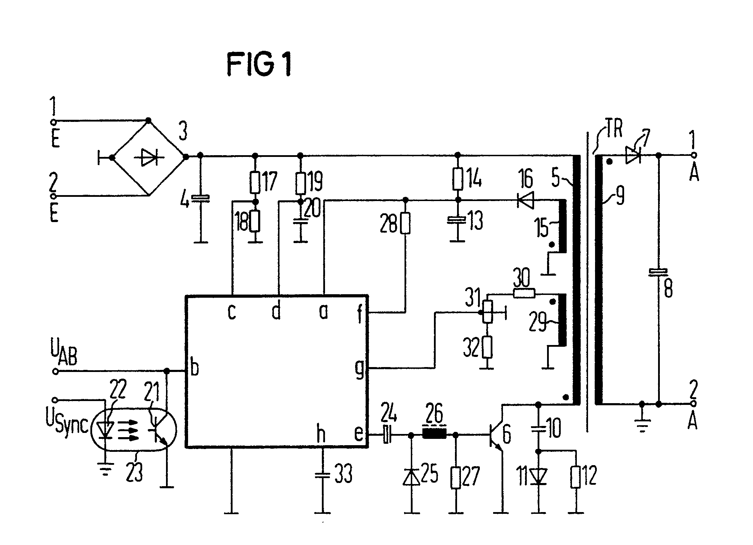

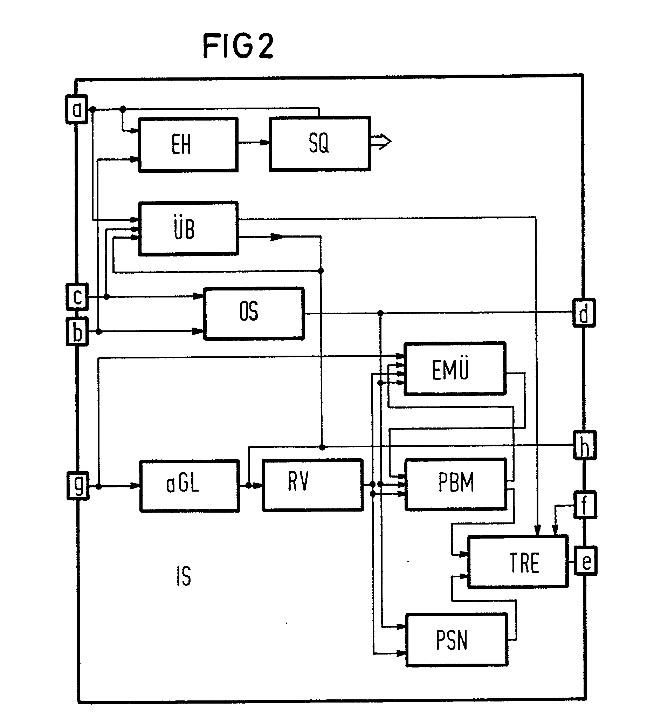

Das Schaltnetzteil der FIG 1 und 2 ist ein leistungsstarker Sperrwandler, der sich insbesondere für Fernsehgeräte mit digitaler Signalverarbeitung und Monitore eignet.

Der dargestellte Sperrwandler überführt eine an primärseitigen Klemmen $1_E$ und $2_E$ abgenommene Netzspannung in eine Reihe von niedrigeren, stabilisierten Ausgangsspannungen, die jeweils an einem sekundärseitigen Klemmenpaar abgenommen werden können; von diesen Klemmen sind lediglich Klemmen $1_A$ und $2_A$ eingezeichnet, die eine Ausgangsspannung $U_A$ liefern. Die Netzspannung wird in einem Gleichrichter 3 gleichgerichtet, in einem Kondensator 4 geglättet und dann über eine Primärwicklung (Speisewicklung 5) eines Transformators TR und die Arbeitsstrecke eines Bipolartransistors 6 auf Masse geführt. Die Ausgangsspannung wird durch Gleichrichtung (Diode 7) und Siebung (Kondensator 8) einer Transformatorspannung gewonnen, die von einer Sekundärwicklung 9 stammt. Eine zur Arbeitsstrecke des Transistors 6 parallele Schutzschaltung, bestehend aus einem Kondensator 10 in Reihe mit einer Diode 11 und einem dazu parallel geschalteten Widerstand 12 stellt sicher, daß der Transistor in allen Betriebszuständen ungefährdet bleibt.

Der Schalttransistor 6 wird von einer integrierten, mit neun Anschlüssen versehenen Steuerschaltung (Ansteuerbaustein IS), die in FIG 2 näher dargestellt ist, pulsbreitenmoduliert angesteuert. Mit Strom versorgt wird der Ansteuerbaustein über einen Anschluß (Pin) a. Ist ein weiterer Anschluß (Pin b) unbeschaltet, so schaltet ein Schaltungsblock EH ("Einschalthysterese") im Ansteuerbaustein eine eine Referenzspannung $U_{ref}$ liefernde Spannungsquelle SR und damit alle anderen Funktionen des Ansteuerbausteins ein, wenn die Versorgungsspannung $U_a$ einen Wert $U_{aE}$ überschreitet, und wieder aus, wenn die Versorgungsspannung den Wert $U_{aA}$ unterschreitet ($U_{aA} < U_{aE}$). Bei abgeschalteter Referenzspannungsquelle ist die Stromaufnahme des gesamten Ansteuerbausteins so gering (etwa 1 mA), daß ein dem Ansteuerbaustein parallel geschalteter Kondensator 13 über einen hochohmigen Widerstand 14 direkt aus der gleichgerichteten Netzspannung auf den Wert $U_{aE}$ aufgeladen werden kann. Im normalen Betrieb erfolgt die Stromversorgung aus einer eigenen Wicklung (Versorgungswicklung 15) des Transformators TR über eine Diode 16. Ist Anschluß b nach Masse geschaltet, so wird die Referenzspannungsquelle auch bei $U_a > U_{aE}$ nicht eingeschaltet. Damit die Spannung am Kondensator 13 nicht allzu groß wird, wird sie durch einen Anstieg der Strom aufnahme oberhalb von $U_{aE}$ begrenzt. Sobald die Verbindung von Pin b nach Masse unterbrochen wird, schaltet sich der Ansteuerbaustein ein. Die Wartezeit für das Aufladen des Kondensators 13 entfällt dabei. Eine mehr ins Einzelne gehende Darstellung dieser Einschalthysterese und ihrer schaltungsmäßigen Realisierung findet sich in der auf den gleichen Erfinder zurückgehenden, am gleichen Tage eingereichten Patentanmeldung "Schaltungsanordnung für ein Schaltnetzteil".

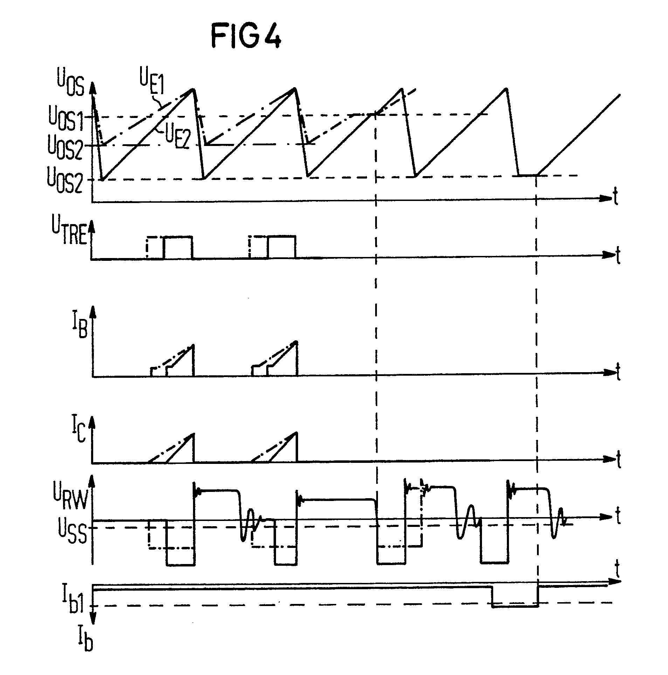

Der Ansteuerbaustein enthält ferner einen Oszillator OS, der ein sägezahnförmiges Oszillatorsignal $U_{OS}$ mit einer der gleichgerichteten Netzspannung $U_E$ proportionalen Amplitude erzeugt. Der obere Spitzenwert $U_{OS1}$ ( $= U_{ref}$) ist dabei fest eingestellt, der untere Spitzenwert $U_{OS2}$ variabel (FIG 4). Die Information über die Netzspannung bekommt der Oszillator über einen weiteren IC-Anschluß (Pin c), und zwar in Form eines $U_E$-proportionalen, zwischen Widerständen 17 und 18 abgegriffenen Spannungssignals $U_C$. Zur Bestimmung der Oszillatorfrequenz ist ein durch seinen Widerstand 19 und einen Kondensator 20 gebildetes, zwischen Eingangsspannung und Masse liegendes RC-Glied vorgesehen, von dem die zwischen Widerstand und Kondensator liegende Spannung $U_d$ dem Oszillator über einen weiteren IC-Anschluß (Pin d) zugeführt wird. Der Ansteuerbaustein sorgt dafür, daß der Kondensator mit einer der Eingangsspannung proportionalen Stromstärke, d.h. während eines von $U_E$ unabhängigen Zeitraums, entladen wird. Da der Widerstand 19 direkt auf $U_E$-Niveau liegt, ist auch die Ladezeit des Kondensators 20 $U_E$-unabhängig, mit dem Ergebnis, daß die Oszillatorfrequenz von der Eingangsspannung nicht beeinflußt wird.

Pin b ist als Stromeingang zur Beschaltung mit einem einen Fototransistor 21 und eine lichtemittierende Diode 22 enthaltenden Optokoppler 23 ausgeführt. Der Fototransistor 21 des Optokopplers 23 arbeitet auf eine virtuelle Spannungsquelle, um auch mit einem relativ preisgünstigen Optokoppler die erforderliche Schnelligkeit zu erreichen. Übersteigt der dem Ansteuerbaustein am Pin b entnommene Strom $I_b$ einen Grenzwert $I_{b1}$, wenn das Oszillatorsignal seinen unteren Spitzenwert $U_{OS2}$ erreicht, so bleibt das Oszillatorsignal auf diesem Wert stehen, bis der entnommene Strom den Wert $I_{b1}$ wieder unterschreitet (FIG 4). Während der übrigen Periode des Oszillatorsignals hat Pin b keinen Einfluß auf den Oszillator OS. Entnimmt der Optokoppler dem Pin b dauernd Strom, so hört der Oszillator auf zu schwingen. Das Schaltnetzteil ist so - über ein geeignetes Abschaltsignal $U_{AB}$ an Pin b -abschaltbar und schaltet sich erst wieder ein, wenn der Optokoppler stromlos wird. Die Diode 22 des Optokopplers 23 wird mit einem Synchronsignal $U_{Sync}$ beaufschlagt, das während des Zeilenrücklaufs den Fototransistor leitend steuert.

Der Ansteuerbaustein umfaßt ferner einen Ansteuerimpulse erzeugenden Pulsbreitenmodulator PBM und einen Treiber TRE, der - über einen Pin e und ein pulsformendes Netzwerk (Längskondensator 24, Querdiode 25, Längsinduktivität 26, Querwiderstand 27) - mit der Basis des Schalttransistors 6 verbunden ist und ihn auf die vom Pulsbreitenmodulator empfangenen Ansteuerimpulse hin schaltet. Der Transistor 6 wird eingeschaltet, wenn das Oszillatorsignal den Spannungswert einer internen Regelschwelle $U_{RS}$ überschreitet, und abgeschaltet, wenn das Oszillatorsignal an seinen oberen Spitzenwert $U_{OS1}$ gelangt (FIG 4). Somit verschiebt sich der Einschaltzeitpunkt abhängig vom Regelsignal und von der Netzspannung; der Ausschaltzeitpunkt bleibt dagegen unverändert.

Da sowohl die Spannungsanstiegsgeschwindigkeit des Oszillatorsignals als auch die Stromanstiegsgeschwindigkeit des Kollektorstroms des Schalttransistors proportional zur Netzspannung sind, entspricht der Abstand zwischen dem Oszillatorsignal und der Regelschwelle dem Kollektorstrom. Voraussetzung dafür ist allerdings, daß vor dem Einschalten des Schalttransistors die Energie aus dem Transformator vollständig abgeflossen ist.

Aus der Differenz zwischen dem Oszillatorsignal und der Regelschwelle bildet ein weiterer Schaltungsblock PSN ("Primärstromnachbildung") den Kollektorstrom nach und versorgt mit dieser Information den Treiber TRE, der der Basis des Schalttransistors 6 einen dem Kollektorstrom $I_C$ proportionalen Strom $I_B$ einprägt. Die Stromverstärkung, unter der der Schalttransistor, betrieben wird, läßt sich mit einem Widerstand 28 einstellen, der von Pin a über einen weiteren IC-Anschluß (Pin f) auf den Treiber geschaltet ist. Um den Transistor schnell und definiert einzuschalten, steigt der eingeprägte Basisstrom $I_B$ zu Beginn eines Ansteuerimpulses rechteckförmig an (FIG 4). Wenn das Oszillatorsignal den oberen Spitzenwert $U_{OS1}$ erreicht hat, schaltet der Treiber Pin e nach Masse. Dann fließt während der Speicherzeit des Schalttransistors aus dessen Basis ein Strom heraus, dessen Abfallgeschwindigkeit von der vor der Transistorbasis liegenden Längsinduktivität 26 bestimmt wird. Am Ende der Speicherzeit fällt der Kollektorstrom in sehr kurzer Zeit ab; der Stromfluß geht zunächst auf den Kondensator 10 und dann von der Primär-auf die Sekundärseite des Transformators über. Die dabei entstehenden hochfrequenten Störungen fallen in den Synchronimpuls (FIG 4). Da das Schaltnetzteil mit dem Zeilenrücklauf des Fernsehgerätes synchronisiert ist, bleibt das Fernsehbild ungestört.

Über eine weitere Wicklung (Regelwicklung) 29, die mit der Sekundärwicklung 9 gut verkoppelt ist, wird die Ausgangsspannung erfaßt und geregelt. Das von der Regelwicklung abgegebene Signal (Rückkopplungsspannung) gelangt über einen abgleichbaren Spannungsteiler (Widerstände 30, 31 und 32) und einen weiteren IC-Anschluß (Pin g) an einen aktiven Gleichrichter aGL. Dieser Gleichrichter erzeugt aus der während der Sperrphase anliegenden Spannung eine Regelinformation. Dazu vermindert er die Ladung eines an einen gesonderten IS-Anschluß (Pin h) geschalteten Kondensators 33, wenn die anliegende Spannung größer als ein Sollwert ist, und erhöht bei Spannungswerten unter dem Sollwert die Ladung. Während der Flußphase ändert er den Ladungszustand nicht. Die vom aktiven Gleichrichter korrigierte Spannung des Regelkondensators wird auf einen Regelverstärker RV gegeben, der die an Pin h liegende Regelinformation invertiert und begrenzt, um die Regelschwelle $U_{RS}$ für den Pulsbreitenmodulator PBM zu generieren.

Der aktive Gleichrichter aGL verändert seine Charakteristik mit dem Spannungswert der Regelschwelle. Wenn die Regelschwelle hoch liegt, gibt der Pulsbreitenmodulator PBM kurze Impulse ab; die an der Regelwicklung ausgekoppelten Impulse sind ebenfalls schmal. Um die Amplitude der Impulse richtig detektieren zu können, arbeitet der aktive Gleichrichter als ein Spitzenwertgleichrichter. Liegt die Regelschwelle niedrig, so gibt der Pulsbreitenmodulator breite Impulse ab. Die Impulse an der Regelwicklung sind ebenfalls breit, aufgrund der hohen übertragenen Leistung jedoch mit hochfrequenten Überschwingern überlagert. Der aktive Gleichrichter filtert die Überschwinger durch Mittelwertgleichrichtung aus. Für eine mehr ins einzelne gehende Darstellung des aktiven Gleichrichters vgl. die am gleichen Tage eingereichte, auf die Erfinder M. Feldtkeller und R. Dangschat zurückgehende Patentanmeldung "Schaltungsanordnung für ein geregeltes Sperrwandler-Schaltnetzteil".

Eine zusätzlich im Ansteuerbaustein vorgesehene Stromquelle lädt den Regelkondensator ständig mit einem sehr geringen Strom von etwa 1 μA auf. Nach dem Einschalten der Referenzspannungsquelle erzeugt dieser Strom am Regelkondensator eine Rampe, die die vom Pulsbreitenmodulator abgegebene Impulse langsam aufsteuert. Das Schaltnetzteil läuft dadurch weich an.

Der Sperrwandler arbeitet, um die geschilderte Primärstromnachbildung verwenden zu können, in einem lückenden Dreieckstrombetrieb, bei dem der Transformator während der Sperrphase seine magnetische Energie vollständig an die Last abgibt. Bei ausgangsseitiger Überlastung, bei Kurzschluß und während des Anschwingvorganges dauert die Entmagnetisierung des Transformators länger als die vom Oszillator vorgegebene Sperrphase. Deshalb hält ein weiterer Schaltungsblock EMÜ ("Entmagnetisierungsüberwachung") in einem solchen Fall das Oszillatorsignal beim Durchlaufen seiner Steuerflanke auf dem Wert $U_{RS}$ an, bis der Transformator vollständig abmagnetisiert ist. Kriterium für die Entmagnetisierung ist eine negative Regelwicklungsspannung $U_{RW}$ (FIG 4).

Die Entmagnetisierungsüberwachung kann durch parasitäre Ein brüche ihres Meßsignals gestört werden: Zum Einen durch hochfrequente Schwingungen zu Beginn der Sperrphase, dem sogenannten Transformatorklingeln. Diese Störungen können an der Regelwicklung kurzzeitig negative Spannungen hervorrufen, bevor der Transformator

entmagnetisiert ist. Dementsprechend blendet die Entmagnetisierungsüberwachung das Trafoklingeln innerhalb eines Zeitintervalls aus, das aus dem Oszillatorsignal abgeleitet ist. Während des Anschwingvorganges erstreckt sich dieses Zeitintervall über eine halbe Oszillatorperiode, im eingeschwungenen Betrieb über die fallende Flanke des Oszillatorsignals. Die Umschaltung erfolgt, wenn die Spannung an Pin a erstmals 80 % des Sollwertes übersteigt. Näheres zu dieser lastspannungsabhängigen Ausblendzeit geht aus der zeitgleich eingereichten, auf den gleichen Erfinder zurückgehenden Patentanmeldung "Schaltungsanordnung für ein Sperrwandler-Schaltnetzteil" (GR 88 E 1539) hervor.

Zum anderen kann die Ausgangsspannung ihre Polarität umkehren, wenn ausgangsseitig plötzlich ein Kurzschluß mit induktivem Anteil auftritt. Die Polaritätsumkehrung wirkt über den Transformator auch dann auf die Regelwicklung, wenn der Transformator noch nicht entmagnetisiert ist. Der negative Spitzenwert, den die Spannung an der Regelwicklung bei einem Kurzschluß erreichen kann, ist jedoch geringer als der negative Spitzenwert am Ende der Entmagnetisierungsphase. Letzterer Spitzenwert ist proportional zur momentanen Ausgangsspannung des Schaltnetzteils. Die Entmagnetisierungsüberwachung ist nun so ausgelegt, daß sie während des Anschwingvorganges die Schaltschwelle von einem sehr geringen positiven Wert aus in negativer Richtung verschiebt. Gesteuert wird der Vorgang von der am Regelkondensator erzeugten Rampe. In welchem Ausmaß die Schaltschwelle sich verschiebt, läßt sich mit dem Widerstandsniveau des Spannungsteilers festlegen. Bei einem Kurzschluß am Ausgang erreicht die Spannung am Pin g die Schaltschwelle nicht mehr, und das Schaltnetzteil hört sofort auf zu schwingen. Es kann erst mit einem weichen Anlauf wieder neu starten. Herrscht während des Anschwingens auf der Sekundärseite ein Kurzschluß, so steigt der negative Spitzenwert am Ende der Entmagnetisierungsphase nicht in dem Maße an, wie sich die Schaltschwelle der Entmagnetisierungsüberwachung verschiebt. Das Schaltnetzteil bricht dann den Startversuch sofort ab. Weitere Einzelheiten dieser Entmagnetisierungsüberwachung sind in der am gleichen Tag eingereichten, vom gleichen Erfinder stammenden Patentanmeldung "Schaltungsanordnung für ein Sperrwandler-Schaltnetzteil" (GR 88 E 1517) enthalten.

Die Ausgangsspannungen des Schaltnetzteils können bei einer Unterbrechung oder einem Kurzschluß im Regelkreis nicht hochlaufen, da die Regelung und die Entmagnetisierungsüberwachung auf dem gleichen Signalweg erfolgen. Fehlt das Signal für die Entmagnetisierungsüberwachung, so kann das Schaltnetzteil nicht schwingen.

Der Ansteuerbaustein IS enthält schließlich noch einen Block ÜB ("Überwachung"), der keine neuen Ansteuerimpulse zuläßt und den Regelkondensator entlädt, wenn eine der folgenden kritischen Bedingungen eintritt: Netzunterspannung, Netzüberspannung, zu niedrige Versorgungsspannung des Ansteuerbausteins, zu hohe Chip-Temperatur und Überlast. Der Überlast-Schutz spricht an, wenn die an Pin g rückgekoppelte Spannung so lange den Sollwert nicht erreicht, bis der 10 μA-Ladestrom den Regelkondensator 33 bis auf eine kritische Spannung aufgeladen hat. Das Ansprechen einer Schutzfunktion bleibt gespeichert, bis der Block EH die Referenzspannungsquelle SR ausschaltet. Da der Ansteuerbaustein nicht mehr über die Versorgungswicklung 15 versorgt wird, entlädt der Baustein mit seiner Eigenstromaufnahme den Kondensator 13 auf die Spannung $U_{aA}$. Bei abgeschalteter Referenzspannungsquelle lädt sich der Kondensator 13 über den Widerstand 14 wieder bis auf die Spannung $U_{aE}$ auf. Der Baustein fragt so periodisch die Schutzbedingung ab.

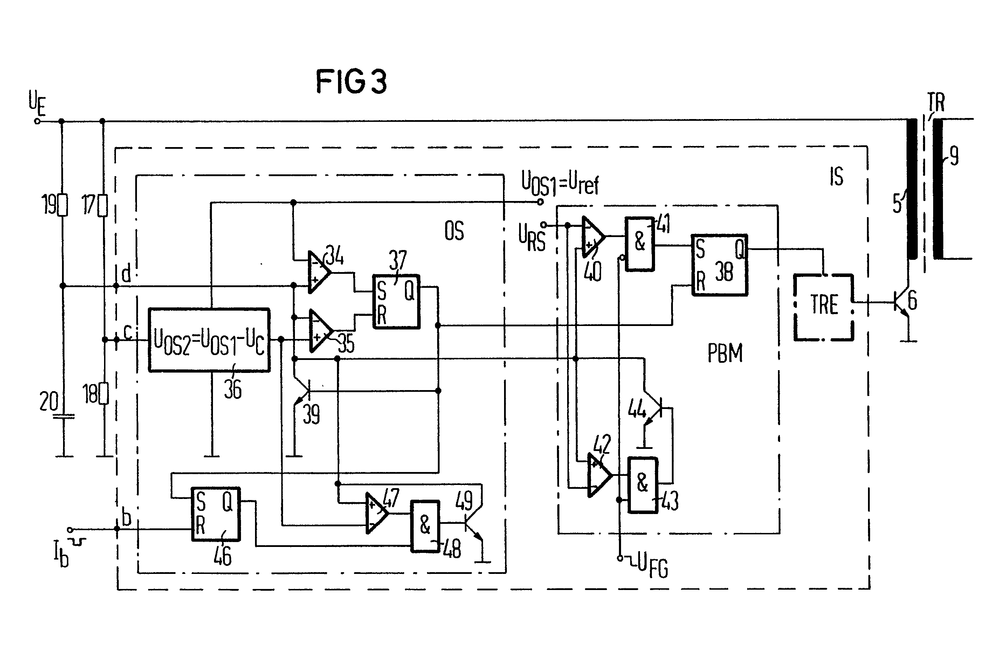

FIG 3 zeigt, mit welchen Schaltmitteln der erfindungsgemäß vorgesehene Oszillator OS realisiert ist.

Ein erster Komparator 34 liegt mit seinem Minuseingang auf dem Niveau der Referenzspannung $U_{Ref}$ ( = $U_{OS1}$). Der Pluseingang dieses Komparators erhält die an Pin d liegende Spannung (erste Oszillatoreingangsspannung $U_d$). Diese Spannung ist außerdem noch auf den Minuseingang eines zweiten Komparators 35 geführt. Der Pluseingang dieses Komparators liegt auf einem Spannungspegel $U_{OS2}$, der in einem Subtraktionsglied 36 durch Subtraktion der an Pin c liegenden Spannung (zweite Oszillatoreingangsspannung $U_c$) von der Referenzspannung gebildet ist.

Die Ausgänge der Komparatoren 34, 35 sind auf einen Set- bzw. einen Reset-Eingang eines Flip-Flops 37 geleitet, dessen Ausgang den Reset-Eingang eines ersten Reset-dominanten Flip-Flops 38 beaufschlagt. Der Plus-Eingang des ersten Komparators 34 wie auch der Minus-Eingang des zweiten Komparators 35 liegen in Reihe mit der Arbeitsstrecke eines nach Masse geschalteten Transistors 39, dessen Basis durch den Ausgang des Flip-Flops 37 gesteuert wird. Dieser Transistor - er repräsentiert eine in der Praxis etwas kompliziertere Transistorschaltung - ist so ausgelegt, daß er auf ein entsprechendes Signal des Flip-Flops 37 hin den Kondensator 20 mit einer zur gleichgerichteten Netzspannung proportionalen Entladestromstärke ausräumt.

Die geschilderte Logik bewirkt, daß dann, wenn die vom RC-Glied bezogene Spannung $U_d$ den Wert $U_{OS1}$ überschreitet, der Treiber eine logische "0" erhält, $U_d$ - durch Aufsteuerung des Transistors 39 - abnimmt und bei sinkenden $U_d$-Werten die "0" am Treiber zunächst noch bestehen bleibt. Unterschreitet $U_d$ den Wert $U_{OS2}$, wird der Transistor 39 gesperrt, so daß $U_d$ wieder ansteigt.

Damit der Treiber erst dann eine logische "1" erhält (und dementsprechend einen Ansteuerimpuls erzeugt), wenn erstens $U_d$ auf ihrer steigenden Flanke eine Regelschwelle $U_{RS}$ passiert hat und zweitens der Transformator TR vollständig entmagnetisiert ist, enthält der Pulsbreitenmodulator PBM einen dritten Komparator 40. Der Minus-Eingang dieses Komparators liegt auf $U_{RS}$-Niveau, sein Plus-Eingang wird mit der Spannung $U_d$ versorgt, und sein Ausgang führt zu einem nicht invertierten Eingang eines ersten UND-Gat ters 41. Ein invertierter Eingang dieses Gatters wird mit dem Freigabesignal $U_{FG}$ der Entmagnetisierungsüberwachung EMÜ beaufschlagt, und der Gatterausgang 41 führt auf den Set-Eingang des Reset-dominanten Flip-Flops 38. Dementsprechend gibt das Flip-Flop nur dann eine logische "1" ab, wenn das Flip-Flop 37 eine logische "0" liefert und zugleich das erste UND-Gatter 41 eine logische "1" erzeugt, d.h. das Freigabesignal der Entmagnetisierungsüberwachung vorliegt und $U_d > U_{RS}$ ist.

Solange kein Freigabesignal vorliegt, wird das ansteigende $U_d$ auf $U_{RS}$-Pegel gehalten. Dies geschieht durch einen Spannungsregler mit einem vierten Komparator 42, einem zweiten UND-Gatter 43 und einer durch einen Transistor 44 repräsentierten Schaltung. Bei diesem Regler sind $U_d$ und $U_{RS}$ jeweils auf den Plus- bzw. Minus-Eingang des vierten Komparators 42 geführt. Der Komparator ist - wie auch der Ausgang der Entmagnetisierungsüberwachung EMÜ -auf jeweils einen Eingang des zweiten UND-Gatters 43 geführt, dessen Ausgang den Transistor 44 steuert. Bei fehlendem Freigabesignal wird dieser Transistor leitend gesteuert; er wird gesperrt, wenn das Freigabesignal anliegt und den Wert $U_{RS}$ überschreitet.

Um das Oszillatorsignal mit dem Zeilenrücklauf zu synchronisieren, wird ein mit dem Zeilenrücklauf koinzidierendes Synchronsignal $U_{Sync}$ erzeugt und in Form des Stromes $I_b$ durch Pin b auf den Rückstell-Eingang eines zweiten Reset-dominanten Flip-Flops 46 gegeben. Der Stell-Eingang dieses Flip-Flops wird vom Ausgangssignal des Flip-Flops 37 beaufschlagt. Der Ausgang des Flip-Flops 46 führt zu einem weiteren Spannungsregler, der ähnlich wie der vom Freigabesignal beaufschlagte Spannungsregler aufgebaut ist. Im einzelnen enthält der Regler einen fünften Komparator 47, der $U_{OS2}$ von $U_d$ abzieht und die Differenz auf ein drittes UND-Gatter 48 gibt. Das Gatter empfängt außerdem noch das Ausgangssignal des Flip-Flops 46 und steuert ausgangsseitig eine einen Transistor 49 aufweisende Halteschaltung. Bei anliegendem Synchronsignal ist der Transistor 49 dann leitend, wenn nach Sperrung des Transistors 39 $U_d$ wieder steigen will; fehlt $U_{Sync}$, ist der Transistor gesperrt. Die Oszillatorfrequenz paßt sich somit einer niedrigeren Frequenz des Synchronsignals an.

Ist der Transformator abmagnetisiert, bevor das Oszillatorsignal die Regelschwelle erreicht hat, so arbeitet das Schaltnetzteil festfrequent, anderenfalls freischwingend. Freischwingender Betrieb tritt dementsprechend während des Anschwingens des Schaltnetzteils und bei ausgangsseitigem Kurzschluß auf.

Die geschilderten Zusammenhänge zwischen dem Oszillatorsignal $U_{OS}$ (= $U_d$), den Ansteuerimpulsen $U_{TRE}$, dem Basisstrom $I_B$, dem Kollektorstrom $I_C$, der Spannung an der Regelwicklung $U_{RW}$ und dem Strom $I_b$ am Pin b sind in FIG 4, auf die bereits wiederholt Bezug genommen worden ist, noch einmal in etwas vereinfachter Form dargestellt. Dabei gelten die durchgezogenen Kurven für den Fall einer relativ großen Eingangsspannung $U_{E1}$ und die strichpunktierten Kurven für den Fall einer relativ kleinen Eingangsspannung $U_{E2}$. Man erkennt, daß das Oszillatorsignal in der aufsteigenden Flanke auf der Regelschwelle $U_{RS}$ festgehalten wird, bis die Regelwicklungsspannung durch eine negative Schaltschwelle $U_{SS}$ gegangen ist, und auf dem unteren Spitzenwert verbleibt, solange ein Synchronimpuls anliegt.

Die Erfindung beschränkt sich nicht nur auf das dargestellte Ausführungsbeispiel. So ist es durchaus denkbar, die $U_E$-abhängige Spannungsanstiegsgeschwindigkeit des Oszillatorsignals mit festgehaltenem unteren und variablem oberen Spitzenwert zu realisieren. Es wäre dann allerdings etwas aufwendiger, die HF-Störungen mit dem Zeilenrücklauf zu synchronisieren. Überdies ist es auch möglich, das Schaltnetzteil mit einer negativen Eingangsspannung zu betreiben; in diesem Fall wäre dann die fallende Flanke des Oszillatorsignals zur Bestimmung der Ansteuerimpulse für den Schalter heranzuziehen.

## Ansprüche

1. Schaltungsanordnung für ein festfrequentes Sperrwandler-Schaltznetzteil, mit folgenden Merkmalen:
1) das Sperrwandler-Schaltnetzteil enthält einen Transformator mit
a) einer Primärwicklung, die im Kreis einer Spannungsquelle, die eine Gleichspannung (Eingangsspannung) mit einem ersten Vorzeichen abgibt, in Reihe mit einem elektrischen Schalter liegt, wobei der Schalter alternierend in einer ersten Arbeitsphase (Flußphase) eingeschaltet ist und in einer zweiten Arbeitsphase (Sperrphase) ausgeschaltet ist und
b) einer Sekundärwicklung, aus deren Spannung (Sekundärwicklungsspannung) eine gleichgerichtete Ausgangsspannung gewonnen wird;
2) die Schaltungsanordnung enthält zum pulsbreitenmodulierten Schalten des Schalters eine integrierbare Ansteuerschaltung mit
a) einem Oszillator, der eine periodisch zwischen einem oberen und einem unteren Spitzenwert schwingende Spannung (Oszillatorsignal) abgibt, und
b) einem Pulsbreitenmodulator, der den Schalter in Abhängigkeit vom Oszillatorsignal schaltet;
**dadurch gekennzeichnet, daß**
2) c) das periodisch schwingende Oszillatorsignal ($U_{OS}$) sich in dem Periodenabschnitt ("Steuerflanke"), in dem seine zeitliche Änderung das gleiche Vorzeichen wie die Eingangsspannung ($U_E$) hat, mit einer Geschwindigkeit ändert, die zumindest abschnittsweise proportional zur Eingangsspannung ($U_E$) ist.

2. Schaltungsanordnung nach Anspruch 1, **dadurch gekennzeichnet, daß** die Eingangsspannung ($U_E$) positiv und dementsprechend jeweils der zwischen dem unteren und dem oberen Spitzenwert ($U_{OS2}$ bzw. $U_{OS1}$) liegende Periodenabschnitt des Oszillatorsignals ($U_{OS}$) die Steuerflanke ist.

3. Schaltungsanordnung nach Anpruch 1 oder 2, **dadurch gekennzeichnet, daß** die Differenz zwischen dem oberen und dem unteren Spitzenwert ($U_{OS1}$ bzw. $U_{OS2}$) proportional zur Eingangsspannung ($U_E$) ist und daß die Pausen zwischen aufeinanderfolgenden Steuerflanken konstant sind.

4. Schaltungsanordnung nach einem der Ansprüche 1 bis 3, **dadurch gekennzeichnet, daß** der obere Spitzenwert ($U_{OS1}$) fest und der untere Spitzenwert ($U_{OS2}$) variabel ist.

5. Schaltungsanordnung nach einem der Ansprüche 1 bis 4, **dadurch gekennzeichnet, daß** der Oszillator (OS) zur Festlegung seiner Schwingungsfrequenz eine zwischen einem Widerstand (19) und einem Kondensator (20) liegende Spannung (erste Oszillatoreingangsspannung $U_d$) erhält, wobei der Widerstand (19) mit der Eingangsspannung ($U_E$) versorgt wird und der Kondensator (20) nach Masse geschaltet ist.

6. Schaltungsanordnung nach Anspruch 5, **dadurch gekennzeichnet, daß** der Oszillator (OS) folgende Elemente enthält:
- einen ersten Komparator (34), dessen Plus-Eingang mit der ersten Oszillatoreingangsspannung ($U_d$) versorgt wird und dessen Minus-Eingang auf dem Niveau des oberen Spitzenwertes ($U_{OS1}$) liegt,
- einen zweiten Komparator (35), dessen Plus-Eingang auf dem Niveau des unteren Spitzenwertes ($U_{OS2}$) liegt, der durch Subtraktion einer der Eingangsspannung ($U_E$) proportionalen Spannung (zweite Oszillatoreingangsspannung $U_c$) vom oberen Spitzenwert ($U_{OS2}$) gebildet ist, und dessen Minus-Eingang auf dem Niveau der ersten Oszillatoreingangsspannung ($U_d$) liegt,
- einen ersten Flip-Flop (37), dessen Setz-Eingang mit dem Ausgang des ersten Komparators (34) verbunden ist, dessen Rückstell-Eingang auf den Ausgang des zweiten Komparators (35) geschaltet ist und dessen Ausgang mit dem Pulsbreitenmodulator (PBM) verbunden ist, und
- eine erste Transistorschaltung, die ebenfalls mit dem Ausgang des ersten Flip-Flops (37) verbunden ist und den Kondensator (20) mit einer der Eingangsspannung ($U_E$) proportionalen Stromstärke entlädt, wenn die erste Oszillatoreingangsspannung ($U_d$) den oberen Spitzenwert ($U_{OS1}$) erreicht hat.

7. Schaltungsanordnung nach einem der Ansprüche 1 bis 6, **dadurch gekennzeichnet, daß** der Pulsbreitenmodulator (PBM) den Schalter (6) einschaltet, wenn das Oszillatorsignal ($U_{OS}$) beim Durchlaufen der Steuerflanke eine Regelschwelle ($U_{RS}$) passiert hat, und den Schalter (9) wieder ausschaltet, wenn das Oszillatorsignal ($U_{OS}$) den am Ende der Steuerflanke gelegenen Spitzenwert erreicht hat.

8. Schaltungsanordnung nach Anspruch 7, **dadurch gekennzeichnet, daß** der Pulsbreitenmodulator (PBM) einen dritten Komparator (40) enthält, dessen Plus-Eingang auf dem Niveau der ersten Oszillator-Eingangsspannung ($U_d$) liegt, dessen Minus-Eingang auf dem Niveau der Regelschwelle ($U_{RS}$) liegt und dessen Ausgang auf den Stell-Eingang eines zweiten, Reset-dominanten Flip-Flops (38) geführt ist, dessen Rückstell-Eingang mit dem Ausgang des ersten Flip-Flops (37) und dessen Ausgang mit einem Treiber (TR) für den Schalter (6) verbunden ist.

9. Schaltungsanordnung nach Anspruch 7 oder 8, **dadurch gekennzeichnet, daß** die Regelschwelle ($U_{RS}$) von der Sekundärwicklungsspannung abgeleitet ist.

10. Schaltungsanordnung nach Anspruch 8 oder 9, mit einer Entmagnetisierungsüberwachung, die das Einschalten des Schalters durch Abgabe eines entsprechenden Freigabesignals erst dann freigibt, wenn der Transformator in der Sperrphase vollständig entmagnetisiert ist, **dadurch gekennzeichnet, daß** das Oszillatorsignal ($U_{OS}$) beim Durchlaufen der Steuerflanke auf der Regelschwelle ($U_{RS}$) festgehalten wird, wenn und solange noch kein Freigabesignal ($U_{FG}$) abgegeben ist.

11. Schaltungsanordnung nach Anspruch 10, **dadurch gekennzeichnet, daß** das Freigabesignal ($U_{FG}$) der Entmagnetisierungsüberwachung (EMÜ) auf einen invertierten Eingang eines ersten UND-Gatters (41) geführt ist, das an einem nicht invertierten Eingang die Regelschwelle ($U_{RS}$) empfängt und dessen Ausgang mit dem Setz-Eingang des zweiten Reset-dominanten Flip-Flops (38) verbunden ist, und daß ein erster Spannungsregler mit einem vierten Komparator (42), einem zweiten UND-Gatter (43) und einer zweiten Transistorschaltung (44) vorgesehen ist, wobei
- der vierte Komparator (42) mit seinem Plus-Eingang auf dem Niveau der ersten Oszillatoreingangsspannung ($U_d$) liegt, mit seinem Minus-Eingang an die Regelschwelle ($U_{RS}$) gelegt ist,
- das zweite UND-Gatter (43) an einem ersten Eingang den Ausgang des vierten Komparators (42) und an einem weiteren Eingang das Freigabesignal ($U_{FG}$) empfängt, und
- die zweite Transistorschaltung (44) durch den Ausgang des zweiten UND-Gatters (43) gesteuert wird und die erste Oszillatoreingangsspannung ($U_d$) auf der Regelschwelle ($U_{RS}$) festhält, wenn und solange kein Freigabesignal ($U_{FS}$) anliegt.

12. Schaltungsanordnung nach einem der Ansprüche 1 bis 11, bei dem das Oszillatorsignal mittels eines Synchronimpulses synchronisiert ist, **dadurch gekennzeichnet, daß** das Oszillatorsignal ($U_{OS}$) auf seinem am Anfang der Steuerflanke gelegenem Spitzenwert festgehalten wird, wenn und solange das Synchronsignal ($U_{Sync}$) anliegt.

13. Schaltungsanordnung nach Anspruch 12, **dadurch gekennzeichnet, daß** das Synchronsignal ($U_{Sync}$) in Form eines Strompulses ($I_b$) auf den Rücksetz-Eingang eines dritten, Reset-dominanten Flip-Flops (46) geführt ist, dessen Setzeingang mit dem Ausgang des ersten Flip-Flops (37) verbunden ist und dessen Ausgang zu einem zweiten, aus einem fünften Komparator (47), einem dritten UND-Gatter (48) und einer dritten Transistorschaltung (49) gebildeten Spannungsreglers führt, wobei
- der fünfte Komparator (47) mit seinem Plus-Eingang auf dem Niveau des ersten Oszillatoreingangssignals ($U_d$) und mit seinem Minus-Eingang auf das Niveau des am Anfang der Steuerflanke gelegenen Spitzenwertes ($U_{OS2}$) gelegt ist,
- das dritte UND-Gatter (48) mit einem ersten Eingang das Ausgangssignal des fünften Komparators (47) empfängt und mit einem zweiten Eingang das Ausgangssignal des dritten, Resetdominanten Flip-Flops (46) erhält und
- die dritte Transistorschaltung (49) durch den Ausgang des dritten UND-Gatters (48) derart geschaltet wird, daß sie dann, wenn ein Strompuls ($I_b$) anliegt, die erste Oszillatoreingangsspannung ($U_d$) auf dem am Anfang der Steuerflanke gelegenen Spitzenwert ($U_{OS2}$) festhält.

14. Schaltungsanordnung nach einem der Ansprüche 1 bis 13, **dadurch gekennzeichnet, daß** die Eingangsspannung ($U_E$) eine gleichgerichtete und gesiebte Netzspannung ist.

15. Schaltungsanordnung nach einem der Ansprüche 1 bis 14, **dadurch gekennzeichnet, daß** sie für Sperrwandler-Schaltnetzteile von Fernsehgeräten mit digitaler Signalverarbeitung oder Monitoren verwendet wird.

# FIG 1

## FIG 2

FIG 3

11

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | ELECTRONIC COMPONENTS & APPLICATIONS vol. 2, no. 1, 30 November 1979, EINDHOVEN NL Seiten 31 - 48; H. HOUKES: "TDA1060 - a comprehensive integrated control circuit for SMPS" * Seite 36, Absatz 2 - Seite 38; Figuren 8, 9, 11, 23 * | 1-3, 14 | H02M3/335 |
| A |  ----- | 4-7, 12 | |

|  |
|---|
| **RECHERCHIERTE SACHGEBIETE (Int. Cl.5)** |
| H02M |

Der vorliegende Recherchenbericht wurde für alle Patentansprüche erstellt

| Recherchenort | Abschlußdatum der Recherche | Prüfer |
|---|---|---|
| DEN HAAG | 02 MAI 1990 | GARDELLA S |